# EUROPEAN PATENT SPECIFICATION

(11) **EP 3 666 651 B1**
(45) Date of publication and mention of the grant of the patent: **16.08.2023**
(21) Application number: 19215118.1
(22) Date of filing: 11.12.2019
(51) Int. Cl.: B64D 11/02, B29C 43/02

(54) **COMPOSITE POTABLE WATER TANK AND METHOD OF FORMING**
ZUSAMMENGESETZTER TRINKWASSERTANK UND VERFAHREN ZUR FORMUNG
RÉSERVOIR D'EAU POTABLE COMPOSITE ET SON PROCÉDÉ DE FORMATION

(30) Priority: 12.12.2018 IN 201811047034
(43) Date of publication of application: 17.06.2020
(73) Proprietor: Goodrich Corporation, Charlotte, NC 28217-4578 (US)
(72) Inventor: KRISHNAPPA, Aruna Kumar Huluvangala, 560086 Bangalore, Karnataka (IN); MAHAPATRA, Guru Prasad, 560037 Bangalore, Karnataka (IN); NAYAK, Ravikumar Lachcha, 581115 Ranebennur, Karnataka (IN)
(74) Representative: Dehns

(56) References cited:
- EP-A1- 3 061 709
- EP-A1- 3 219 613
- EP-A1- 3 450 314
- CA-A1- 2 778 930
- US-A- 4 982 856
- US-A1- 2006 060 289
- US-A1- 2016 257 403

## Description

### CROSS-REFERENCE TO RELATED APPLICATIONS

This application claims the benefit of Indian Application No. 201811047034 filed December 12, 2018.

### BACKGROUND

Exemplary embodiments pertain to the art of water systems. More specifically, the present disclosure relates to potable water systems utilizing conformal-shaped water storage tanks.

Many applications, such as passenger aircraft, passenger trains, or the like often include potable water systems to provide water for use by passengers during operation. In an aircraft, for example, some potable water systems include a large water storage tank which is pressurized with air. The air typically is bleed air from an auxiliary power unit or is provided by a standalone air compressor for the potable water system. Aircraft operators typically desire the tank to maximize water volume storage capability, while also minimizing interior aircraft space utilized by the water storage tank. For this reason, the water storage tank is often made to an irregular or conformal shape, meant to fit in an irregular-shaped space allotted for the water storage tank at the interior of the aircraft. US4982856A relates to high temperature, high pressure thermoplastic hot water tanks and US2006/060289A1 relates to composite thermoplastic pressure vessels and methods for making same.

### BRIEF DESCRIPTION

In one embodiment, a potable 2. water tank includes a compression molded tank shell is described herein and defined in claim 1. The tank shell includes a back panel and a side panel extending from the back panel. The side panel defines an outer perimeter of the water tank. A compression molded front panel is secured to the side panel to enclose an interior of the water tank.

One or more baffles are positioned in the interior of the water tank. The one or more baffles extending between portions of the side panel from the back panel to the front panel.

Additionally, in this or other embodiments the one or more baffles are secured to one of the side panel or the back panel by welding.

Additionally, in this or other embodiments the one or more baffles are positioned in one or more slots formed in the side panel.

Additionally, in this or other embodiments the front panel is secured to the side panel via welding.

Additionally, in this or other embodiments one or more accessory components or fittings are secured to one or more of the side panel, the front panel or the back panel.

Additionally, in this or other embodiments the tank shell is formed of a plurality of fibers suspended in a thermoplastic resin.

Additionally, in this or other embodiments the plurality of fibers are carbon fibers or glass fibers.

Additionally, in this or other embodiments the thermoplastic resin is one of polyetheretherketone (PEEK), polyaryletherketone (PAEK), or polyphenylene sulfide (PPS).

Additionally, in this or other embodiments a liner is located in the interior of the water tank.

Additionally, in this or other embodiments the liner is a high density polyethylene (HDPE), polyetheretherketone (PEEK) or polypropylene (PP) in the form of a powder coating, film or sheet.

In another embodiment, a method of forming a potable water tank is described herein and defined in claim 7. The method includes forming a tank shell via a compression molding process, the tank shell including a back panel and a side panel extending from the back panel, the side panel defining an outer perimeter of the water tank. A front panel is separately formed by compression molding, and the front panel is secured to the side panel thereby enclosing an interior of the water tank.

In this embodiment one or more baffle sheets are formed and the one or more baffle sheets are installed in the interior prior to securing the front panel to the side panel. The one or more baffle sheets extend between portions of the side panel from the back panel to the front panel.

Additionally, in this or other embodiments the one or more baffle sheets are secured to one of the side panel or the back panel via welding.

Additionally, in this or other embodiments the one or more baffle sheets are installed into one or more slots formed in one of the side panel or the back panel.

Additionally, in this or other embodiments the front panel is secured to the side panel via welding.

Additionally, in this or other embodiments one or more accessory components or fittings are secured to one or more of the side panel, the front panel or the back panel.

Additionally, in this or other embodiments a liner is installed in the interior of the water tank prior to securing the front panel to the side panel.

Additionally, in this or other embodiments the tank shell is formed of a plurality of fibers suspended in a thermoplastic resin.

Additionally, in this or other embodiments the liner is a high density polyethylene (HDPE), polyetheretherketone (PEEK) or polypropylene (PP) in the form of a powder coating, film or sheet.

### BRIEF DESCRIPTION OF THE DRAWINGS

The following descriptions should not be considered limiting in any way. With reference to the accompanying drawings, like elements are numbered alike:
FIG. 1 is a perspective view of an embodiment of a water tank;
FIG. 2 is a side view of an embodiment of a water tank;
FIG. 3 is a schematic illustration of a material utilized in formation of a water tank;
FIG. 4 is schematic illustration of a baffle arrangement in a water tank;
FIG. 5 is a schematic illustration of another baffle arrangement in a water tank; and
FIG. 6 is a schematic illustration of a method of making a water tank.

### DETAILED DESCRIPTION

A detailed description of one or more embodiments of the disclosed apparatus and method are presented herein by way of exemplification and not limitation with reference to the Figures.

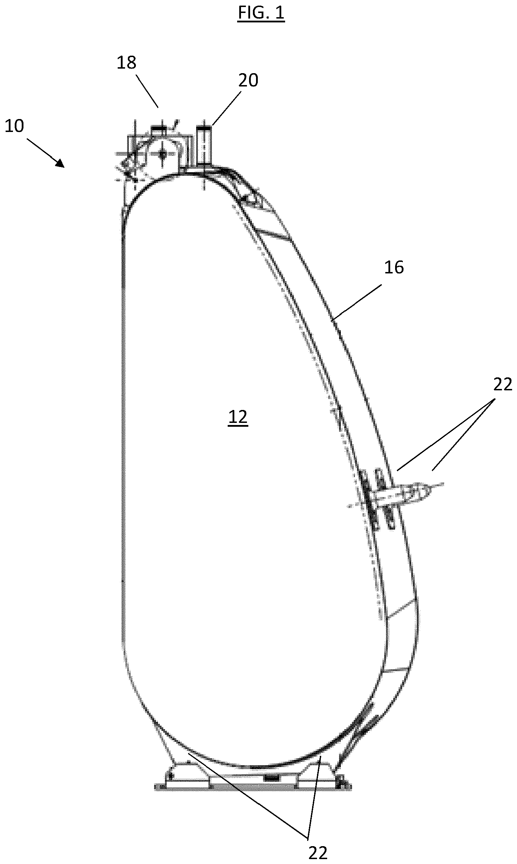

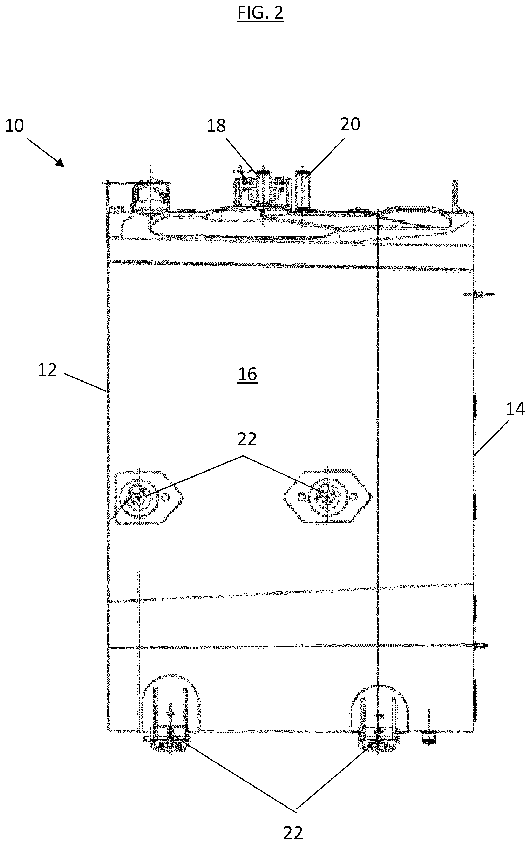

Referring to FIG. 1, shown is a schematic view of a potable water tank 10 for use in, for example, an aircraft or the like. In some embodiments, the water tank 10 is sized, for example, to hold 20 gallons of water and additional free air space. The water tank 10 includes a front wall 12, a back wall 14 (shown in FIG. 2), and a side wall 16 extending between the front wall 12 and the back wall 14. The side wall 16 defines an outer perimeter of the water tank 10. The water tank 10 has a tank inlet 18 and a tank outlet 20, which in some embodiments are accessory components attached to, for example, the side wall 16. The tank inlet 18 and the tank outlet 20 are configured to admit water to the water tank 10 and egress water from the water tank 10, respectively. Further, the water tank 10 may include one or more fittings 22 bonded or otherwise attached to the water tank 10, for example at the side wall 16.

As shown in FIGs. 1 and 2, in some embodiments the front wall 12 and the back wall 14 are flat and planar, while the side wall 16 has a curvilinear profile around the perimeter of the water tank 10.

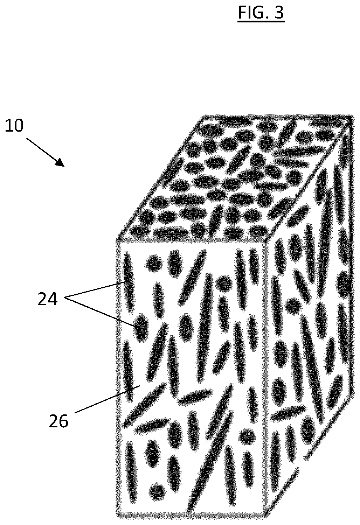

Referring now to FIG. 3, the water tank 10 is formed from a composite or molded construction of a plurality of fibers 24 suspended in a thermoplastic resin 26 formed via, for example, a compression molding process. In some embodiments, as shown in FIG. 3, the plurality of fibers 24 are oriented randomly, which enables mechanical properties of the composite part in all directions, or isotropically, similar to metal materials. In some embodiments, the plurality of fibers 24 are short or chopped carbon fiber or glass fiber. The thermoplastic resin 26 is a thermoplastic material such as polyetheretherketone (PEEK), polyaryletherketone (PAEK), or polyphenylene sulfide (PPS), for example, while other thermoplastic resin materials may be used in other embodiments. The compression molded composite structure of the water tank 10 withstands the selected hydrostatic pressure of the interior of the water tank 10, and additionally provides insulation due to the thermoplastic resin, which has low thermal conductivity.

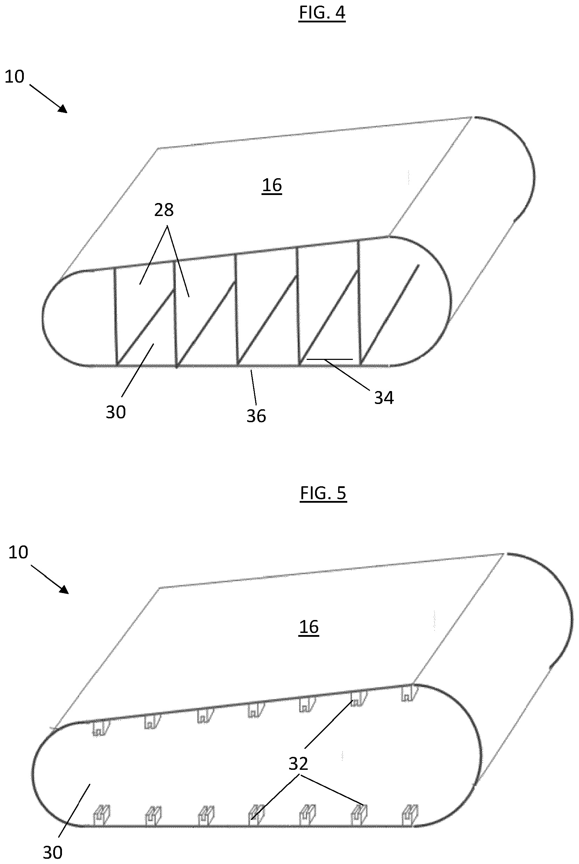

Referring now to FIG. 4, the interior 30 of the water tank 10 has one or more baffles 28 located therein. The baffles 28 extend between the front wall 12 and the back wall 14, and between portions of the side wall 16. In some embodiments, such as illustrated in FIG. 4, the baffles 28 are secured in the interior 30 by welding the baffles 28 to the back wall 14 and/or the side wall 16. In other embodiments, referring now to FIG. 5, mounting features 32 such as slots or brackets are formed in the side wall 16 and/or the back wall 14. The baffles 28 are installed by inserting the baffles 28 into the mounting features 32 to position and retain the baffles 28 in place in the interior 30 of the water tank 10. In some embodiments, the baffles 28 are formed from extruded sheets of thermoplastic material or thermoplastic material reinforced with short or chopped carbon fibers or glass fibers. Once the plurality of baffles 28 are installed, the front wall 12 is installed to enclose the water tank 10. The tank inlet 18, the tank outlet 20 and the one or more fittings 22 may be formed using thermoplastic based composite material and may be, for example, cocured with or welded to the water tank 10.

Referring again to FIG. 4, in some embodiments the interior 30 of the water tank 10 includes a liner 34 to prevent water leakage and compressed air leakage through the water tank 10. In some embodiments, the liner is a high density polyethylene (HDPE), polyetheretherketone (PEEK) or polypropylene (PP) in the form of a powder coating, film or sheet which may be sprayed or bonded to the interior wall J 36 including the front wall 12 of the water tank 10. The liner 34 may be cured either by a localized flame spray operation or by placement into an oven at appropriate temperature. Alternatively, the film or sheet liner material 34 may be applied by a thermoforming bladder process.

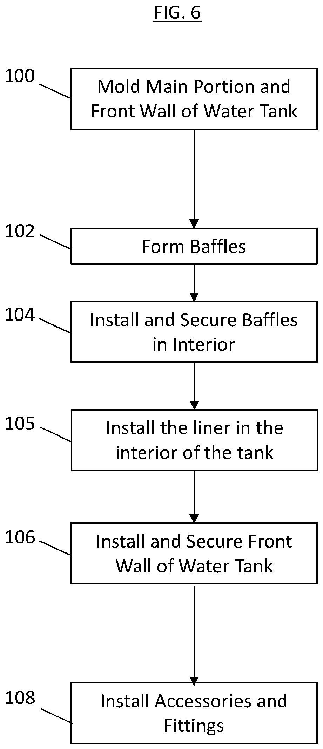

Referring now to FIG. 6, illustrated is a schematic of a method of making a fuel tank 10. Referring to block 100, a main portion of the water tank 10, including the back wall 14 and the side wall 16 is compression molded. The front wall 12 is also separately compression molded at block 100. The baffles 28 are formed at block 102, and installed into and secured in the interior 30 of the water tank 10 by welding or joining. At block 104, the liner 34 material is applied and secured to the interior 30 of the water tank 10. Also, at block 105, liner 34 material is applied on the inside of the front wall 12. At block 106, the front wall 12 is secured to the water tank 10 by, for example, welding, thus enclosing the water tank 10, and at block 108 accessories or fittings 22 are installed by, for example, co-curing or welding.

The configurations of water tank 10 disclosed herein results in a lightweight water tank 10, compared to prior art metal water tanks, due at least in part to the density of the composite material being 1/3 that of a typical metal material. The compression molded water tank 10 has improved toughness, and meets flame, smoke and toxicity requirements. The material is weldable and the process time needed to construct the water tank 10 is relatively short, in some cases compression molding process takes between 10 and 30 minutes. Due to the insulative properties of the compression molded material, the tank capacity is increased or alternatively occupies a smaller space because of the reduced insulation thickness needed.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A potable water tank (10) comprising:
a compression molded tank shell, the tank shell including:
a back panel (14);
a compression molded front panel (12); and
a side panel (16) extending from the back panel (14) to the compression molded front panel (12), the side panel defining an outer perimeter of the water tank;
the compression molded front panel (12) being secured to the side panel to enclose an interior of the water tank; **characterized by** one or more baffles (28) disposed in the interior of the water tank, the one or more baffles extending between portions of the side panel from the back panel to the front panel.

2. The water tank of claim 1, wherein the one or more baffles (28) are secured to one of the side panel (16) or the back panel (14) by welding and/or wherein the one or more baffles are disposed in one or more slots (32) formed in the side panel.

3. The water tank of any preceding claim, wherein the front panel (12) is secured to the side panel via welding.

4. The water tank of any preceding claim, further comprising one or more accessory components or fittings secured to one or more of the side panel (16), the front panel (12) or the back panel (14).

5. The water tank of any preceding claim, wherein the tank shell is formed of a plurality of fibers suspended in a thermoplastic resin, and optionally wherein the plurality of fibers are carbon fibers or glass fibers and optionally wherein the thermoplastic resin is one of polyetheretherketone (PEEK), polyaryletherketone (PAEK), or polyphenylene sulfide (PPS).

6. The water tank of any preceding claim, further comprising a liner (34) disposed in the interior of the water tank (10), and optionally wherein the liner is a high density polyethylene (HDPE), polyetheretherketone (PEEK) or polypropylene (PP) in the form of a powder coating, film or sheet.

7. A method of forming a potable water tank (10), comprising:
forming a tank shell via a compression molding process, the tank shell including:
a back panel (14); and
a side panel (16) extending from the back panel, the side panel defining an outer perimeter of the water tank; and
separately forming a front panel (12) by compression molding; and
securing the front panel to the side panel thereby enclosing an interior of the water tank, wherein the side panel extends from the back panel to the front panel; **characterized by**
forming one or more baffle sheets (28); and
installing the one or more baffle sheets in the interior prior to securing the front panel to the side panel, the one or more baffle sheets extending between portions of the side panel from the back panel to the front panel.

8. The method of claim 7, wherein the one or more baffle sheets (28) are secured to one of the side panel (16) or the back panel (14) via welding and/or wherein the one or more baffle sheets are installed into one or more slots formed in one of the side panel or the back panel.

9. The method of claim 7 or 8, further comprising securing the front panel (12) to the side panel (16) via welding.

10. The method of any of claims 7 to 9, further comprising securing one or more accessory components or fittings to one or more of the side panel (16), the front panel (12) or the back panel (14).

11. The method of any of claims 7 to 10, further comprising installing a liner (34) in the interior of the water tank (10) prior to securing the front panel (12) to the side panel (16).

12. The method of any of claims 7 to 11, wherein the tank shell is formed of a plurality of fibers suspended in a thermoplastic resin.

13. The method of claim 12, wherein the liner (34) is a high density polyethylene (HDPE), polyetheretherketone (PEEK) or polypropylene (PP) in the form of a powder coating, film or sheet.

## Patentansprüche

1. Trinkwassertank (10), umfassend:
eine formgepresste Tankhülle, wobei die Tankhülle Folgendes beinhaltet:
eine Rückwand (14);
eine formgepresste Vorderwand (12); und
eine Seitenwand (16), die sich von der Rückwand (14) zu der formgepressten Vorderwand (12) erstreckt, wobei die Seitenwand einen Außenumfang des Wassertanks definiert;
wobei die formgepresste Vorderwand (12) an der Seitenwand befestigt ist, um einen Innenraum des Wassertanks zu umschließen; **gekennzeichnet durch**
ein oder mehrere Leitbleche (28), die im Inneren des Wassertanks angeordnet sind, wobei sich das eine oder die mehreren Leitbleche zwischen Abschnitten der Seitenwand von der Rückwand zu der Vorderwand erstrecken.

2. Wassertank nach Anspruch 1, wobei das eine oder die mehreren Leitbleche (28) durch Schweißen an der Seitenwand (16) oder der Rückwand (14) befestigt sind und/oder wobei das eine oder die mehreren Leitbleche in einem oder mehreren Schlitzen (32), die in der Seitenwand geformt sind, angeordnet sind.

3. Wassertank nach einem der vorhergehenden Ansprüche, wobei die Vorderwand (12) durch Schweißen an der Seitenwand befestigt ist.

4. Wassertank nach einem der vorhergehenden Ansprüche, ferner umfassend eine oder mehrere Zubehörkomponenten oder -beschläge, die an einer oder mehreren von der Seitenwand (16), der Vorderwand (12) oder der Rückwand (14) befestigt sind.

5. Wassertank nach einem der vorhergehenden Ansprüche, wobei die Tankhülle aus einer Vielzahl Fasern geformt ist, die in einem thermoplastischen Harz suspendiert ist, und wobei die Vielzahl von Fasern optional Kohlenstofffasern oder Glasfasern ist und wobei optional das thermoplastische Harz eines von Polyetheretherketon ist (PEEK), Polyaryletherketon (PAEK) oder Polyphenylensulfid (PPS) ist.

6. Wassertank nach einem der vorhergehenden Ansprüche, ferner umfassend eine Auskleidung (34), die im Inneren des Wassertanks (10) angeordnet ist, und wobei die Auskleidung optional ein hochdichtes Polyethylen (HDPE), Polyetheretherketon (PEEK) oder Polypropylen (PP) in Form einer Pulverbeschichtung, eines Films oder einer Platte ist.

7. Verfahren zum Formen eines Trinkwassertanks (10), umfassend:
Formen einer Tankhülle mittels eines Formpressverfahrens, wobei die Tankhülle Folgendes beinhaltet:
eine Rückwand (14); und
eine Seitenwand (16), die sich von der Rückwand erstreckt, wobei die Seitenwand einen Außenumfang des Wassertanks definiert; und
separates Formen einer Vorderwand (12) durch Formpressen; und
Befestigen der Vorderwand an der Seitenwand, wodurch ein Innenraum des Wassertanks umschlossen wird, wobei sich die Seitenwand von der Rückwand zu der Vorderwand erstreckt;
**gekennzeichnet durch**
Formen eines oder mehrerer Leitbleche (28); und
Installieren der einen oder mehreren Leitbleche im Innenraum vor dem Befestigen der Vorderwand an der Seitenwand, wobei sich das eine oder die mehreren Leitbleche zwischen Abschnitten der Seitenwand von der Rückwand zu der Vorderwand erstrecken.

8. Verfahren nach Anspruch 7, wobei das eine oder die mehreren Leitbleche (28) durch Schweißen an der Seitenwand (16) oder der Rückwand (14) befestigt werden und/oder wobei das eine oder die mehreren Leitbleche in einen oder mehrere Schlitze installiert werden, die in einer von der Seitenwand oder der Rückwand geformt sind.

9. Verfahren nach Anspruch 7 oder 8, ferner umfassend Befestigen der Vorderwand (12) an der Seitenwand (16) durch Schweißen.

10. Verfahren nach einem der Ansprüche 7 bis 9, ferner umfassend Befestigen einer oder mehrerer Zubehörkomponenten oder - beschläge an einer oder mehreren von der Seitenwand (16), der Vorderwand (12) oder der Rückwand (14).

11. Verfahren nach einem der Ansprüche 7 bis 10, ferner umfassend Installieren einer Auskleidung (34) im Inneren des Wassertanks (10) vor dem Befestigen der Vorderwand (12) an der Seitenwand (16).

12. Verfahren nach einem der Ansprüche 7 bis 11, wobei die Tankhülle aus einer Vielzahl von Fasern besteht, die in einem thermoplastischen Harz suspendiert ist.

13. Verfahren nach Anspruch 12, wobei die Auskleidung (34) ein hochdichtes Polyethylen (HDPE), Polyetheretherketon (PEEK) oder Polypropylen (PP) in Form einer Pulverbeschichtung, eines Films oder einer Platte ist.

## Revendications

1. Réservoir d'eau potable (10) comprenant :
une coque de réservoir moulée par compression, la coque de réservoir comprenant :
un panneau arrière (14) ;
un panneau avant moulé par compression (12) ; et
un panneau latéral (16) s'étendant du panneau arrière (14) au panneau avant moulé par compression (12), le panneau latéral définissant un périmètre externe du réservoir d'eau ;
le panneau avant moulé par compression (12) étant fixé au panneau latéral pour enfermer un intérieur du réservoir d'eau ;
**caractérisé en ce que** un ou plusieurs déflecteurs (28) sont disposés à l'intérieur du réservoir d'eau, les un ou plusieurs déflecteurs s'étendant entre des parties du panneau latéral depuis le panneau arrière jusqu'au panneau avant.

2. Réservoir d'eau selon la revendication 1, dans lequel les un ou plusieurs déflecteurs (28) sont fixés au panneau latéral (16) ou au panneau arrière (14) par soudage et/ou dans lequel les un ou plusieurs déflecteurs sont disposés dans une ou plusieurs fentes (32) formées dans le panneau latéral.

3. Réservoir d'eau selon une quelconque revendication précédente, dans lequel le panneau avant (12) est fixé au panneau latéral par soudage.

4. Réservoir d'eau selon une quelconque revendication précédente, comprenant en outre un ou plusieurs composants ou raccords accessoires fixés à un ou plusieurs du panneau latéral (16), du panneau avant (12) ou du panneau arrière (14).

5. Réservoir d'eau selon une quelconque revendication précédente, dans lequel la coque de réservoir est formée d'une pluralité de fibres en suspension dans une résine thermoplastique, et éventuellement dans lequel la pluralité de fibres sont des fibres de carbone ou des fibres de verre et éventuellement dans lequel la résine thermoplastique est polyétheréthercétone (PEEK), de la polyaryléthercétone (PAEK) ou du sulfure de polyphénylène (PPS).

6. Réservoir d'eau selon une quelconque revendication précédente, comprenant en outre un revêtement (34) disposé à l'intérieur du réservoir d'eau (10), et éventuellement dans lequel le revêtement est en polyéthylène haute densité (HDPE), polyétheréthercétone (PEEK) ou polypropylène (PP) sous la forme d'un revêtement en poudre, d'un film ou d'une feuille.

7. Procédé de formation d'un réservoir d'eau potable (10), comprenant :
la formation d'une coque de réservoir par un processus de moulage par compression, la coque de réservoir comprenant :
un panneau arrière (14) ; et
un panneau latéral (16) s'étendant depuis le panneau arrière, le panneau latéral définissant un périmètre externe du réservoir d'eau ; et
la formation séparée d'un panneau avant (12) par moulage par compression ; et
la fixation du panneau avant au panneau latéral, enfermant ainsi un intérieur du réservoir d'eau, dans lequel le panneau latéral s'étend depuis le panneau arrière vers le panneau avant ;
**caractérisé par**
la formation d'une ou de plusieurs feuilles déflectrices (28) ; et
l'installation des une ou plusieurs feuilles déflectrices à l'intérieur avant de fixer le panneau avant au panneau latéral, les une ou plusieurs feuilles déflectrices s'étendant entre des parties du panneau latéral depuis le panneau arrière vers le panneau avant.

8. Procédé selon la revendication 7, dans lequel les une ou plusieurs feuilles déflectrices (28) sont fixées au panneau latéral (16) ou au panneau arrière (14) par soudage et/ou dans lequel les une ou plusieurs feuilles déflectrices sont installées dans une ou plusieurs fentes formées au panneau latéral ou au panneau arrière.

9. Procédé selon la revendication 7 ou 8, comprenant en outre la fixation du panneau avant (12) au panneau latéral (16) par soudage.

10. Procédé selon l'une quelconque des revendications 7 à 9, comprenant en outre la fixation d'un ou de plusieurs composants ou raccords accessoires à un ou plusieurs du panneau latéral (16), du panneau avant (12) ou du panneau arrière (14).

11. Procédé selon l'une quelconque des revendications 7 à 10, comprenant en outre l'installation d'un revêtement (34) à l'intérieur du réservoir d'eau (10) avant de fixer le panneau avant (12) au panneau latéral (16).

12. Procédé selon l'une quelconque des revendications 7 à 11, dans lequel la coque de réservoir est formée d'une pluralité de fibres en suspension dans une résine thermoplastique.

13. Procédé selon la revendication 12, dans lequel le revêtement (34) est en polyéthylène haute densité (HDPE), polyétheréthercétone (PEEK) ou polypropylène (PP) sous la forme d'un revêtement en poudre, d'un film ou d'une feuille.
